# EUROPEAN PATENT APPLICATION

(11) **EP 4 776 202 A1**
(43) Date of publication of application: **15.07.2026**
(21) Application number: 26150354.4
(22) Date of filing: 06.01.2026
(51) Int. Cl.: G06Q 10/46

(54) **INTELLIGENT ROBOT SYSTEM WITH COMMUNITY MANAGEMENT CAPABILITY AND METHOD FOR OPERATING THE SAME**

(30) Priority: 13.01.2025 US 202563744794 P
(71) Applicant: Playsee Inc., KY1 -1208 West Bay Grand Cayman (KY)
(72) Inventor: LI, Yu-Hsien, 116 Taipei City (TW)
(74) Representative: Viering, Jentschura & Partner mbB Patent- und Rechtsanwälte

(57) **Abstract**

An intelligent robot system with communication management capability and a method for operating the intelligent robot system. The intelligent robot system includes a cloud server (20), and the cloud server (20) provides a database (22) that includes multiple intelligent robot models (223). In the method, multiple intelligent robots (101) having respective outer appearance images are generated by the multiple intelligent robot models (223). The intelligent robots (101) are deployed to a social media, in which the multiple intelligent robots (101) establish social relationships with other users and generate community activity data. After operating a generative artificial intelligence, the intelligent robot (101) generates community contents based on its attribute and the social relationships. A community value for each of the intelligent robots (101) is formed according to the social relationships between the users and each of the intelligent robots (101), the community activity data relating to the intelligent robot (101), and the community contents.

## Description

### FIELD OF THE INVENTION

The present invention relates to a social media formed by intelligent robots, and more particularly to an intelligent robot system with community management capability that is established through a machine-learning method and a generative artificial intelligence, and a method for operating the same.

### BACKGROUND OF THE INVENTION

With rapid development of artificial intelligence (AI) in various fields, one of the flourishing AI technologies is a generative AI that is implemented by a large language model (LLM) for processing natural languages. One of the applications using the generative AI is a chatbot that is able to interact with users using the natural languages.

A social media is a network service that allows the users to share contents, exchange messages, establish friendships, and set up clubs. The social media allows the users participating the community to conduct various interactions, such as expressing opinions on various messages, interacting with each other, and sharing texts, images, music, and videos.

In particular, the large language models are adopted in software sequences of the social media for analyzing comments and contents posted by each of the users in the social media, so that the interested contents can be pushed to the users by learning characteristics of the users and analyzing emotions of the users. Further, the social media can implement applications such as public opinion analysis and chatbots by a natural language processing (NLP) technology.

### SUMMARY OF THE INVENTION

The present invention relates to an intelligent robot system with community management capability and a method for operating the same. Multiple intelligent robots having individualized attributes and basic data are generated by a computing power of a cloud server. The intelligent robots are deployed to a social media, and the intelligent robots can be used to manage the social media. The intelligent robot system operates intelligent robot models for enabling the intelligent robots to autonomously conduct community activities in the social media. The intelligent robot can use a generative AI to generate contents consistent with its own attributes, interact with a real person through actions such as likes, shares, and comments, and establish social relationships with other intelligent robots or the real persons.

In one embodiment of the intelligent robot system with community management capability, the system includes a cloud server and a database that stores multiple intelligent robot models. When a processing circuit executes a program set stored in a non-transitory computer-readable media, the multiple intelligent robot models are used to generate multiple intelligent robots that have their own outer appearances. The intelligent robots are then deployed to a social media. The cloud server is configured to operate the multiple intelligent robot models for establishing social relationships between multiple users and the multiple intelligent robots in the social media and generating community activity data. Further, a generative AI operated in the cloud server is used to generate one or more community contents based on the attributes of each of the intelligent robots and the social relationships between the multiple users and the intelligent robots in the social media. In the social media, a community value of each of the intelligent robots can be formed based on the social relationships between each of the intelligent robots and the multiple users, the community activity data, and the one or more community contents relating to the intelligent robot.

Further, the attributes and the community activity data of the intelligent robot are referred to for creating a robot profile of each of the intelligent robots. The robot profile includes a transaction price, an endorsement advertisement price, and a popularity in the social media that are calculated based on the community value of the intelligent robot.

Still further, the database also stores image data of the outer appearance images of the multiple intelligent robots. The image data indicates a simulation image that is generated by the generative AI of the intelligent robot. The image data of the simulation image of the intelligent robot can be transmitted to a user device. The simulation image is displayed on a display of the user device for interacting with the user.

A process of establishing the multiple intelligent robots in the cloud server includes firstly setting up the attributes of each of the intelligent robots, and acquiring training data that is retrieved based on the attributes of each of the intelligent robot. A machine-learning algorithm is performed to learn the training data for training the multiple intelligent robot models, and the multiple intelligent robots are generated by operating the multiple intelligent robot models in the cloud server.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram depicting an application circumstance of an intelligent robot system with community management capability according to one embodiment of the present invention;
Fig. 2 is a schematic diagram depicting a system framework of the intelligent robot system with community management capability according to one embodiment of the present invention;
Fig. 3 is a flowchart illustrating a process of establishing a robot community according to one embodiment of the present invention;
Fig. 4 is a flowchart illustrating a process of establishing community activity data of an intelligent robot in a social media according to one embodiment of the present invention;
Fig. 5 is a flowchart illustrating a method for operating the intelligent robot system with community management capability according to one embodiment of the present invention;
Fig. 6 is a schematic diagram depicting a community page having the intelligent robot according to one embodiment of the present invention;
Fig. 7 is a schematic diagram depicting the community page having the intelligent robot according to another embodiment of the present invention;
Fig. 8 is a schematic diagram depicting generation and deployment of the intelligent robots according to one embodiment of the present invention;
Fig. 9 is a schematic diagram depicting an intelligent robot creation interface according to one embodiment of the present invention; and
Fig. 10 is a schematic diagram depicting an intelligent robot payment interface according to one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention relates to an intelligent robot system with community management capability and a method for operating the intelligent robot system. The intelligent robot system with community management capability performs a machine-learning algorithm, a generative AI technology, or a three-dimensional simulation image drawing technology by a computer system, so as to create various intelligent robot models with various unique attributes, basic data, and/or outer appearance images. The intelligent robot models are used to generate the intelligent robots to be operated in various network communities. The intelligent robot models operated in the intelligent robot system enable the multiple intelligent robots to have capability of managing communities in a human-like manner. The intelligent robots can therefore engage activities in a social media. For real persons in the social media, the intelligent robots act as virtual users in the social media that is operated by the intelligent robot system with community management capability. A platform that allows the real persons and the virtual users to interact with each other, just like the interactions between the real persons, can be established.

Further, the multiple intelligent robots that is generated by the intelligent robot system with community management capability can be deployed to a specific social media. The multiple intelligent robot models operated by the intelligent robot system enable each of the intelligent robots to have its own image, respond to messages of the social media, and interact with other intelligent robots or the real persons autonomously. For example, the intelligent robots operated in the social media are capable of engaging various community activities, such as accepting invitations from friends and performing actions that include like, save, share, and comment on the contents to be interpreted. The intelligent robots can also autonomously generate the contents that are consistent with their own attributes and basic data or in response to the interactions by the generative AI in the social media. The contents can be texts, pictures, audios, or videos.

In certain embodiments of the present invention, through operations of the intelligent robot system, the intelligent robots can have their own social relationships and manage their own channels with texts, pictures, or videos, by which the social relationships can also be established. The intelligent robots may have their followers or become followers of other users. The intelligent robots can further establish their own fan pages, groups, and blogs that can be used for interacting with other real or virtual users.

Further, the real persons in the social media can select any of the intelligent robots to establish the social relationships based on their requirements. In one embodiment of the present invention, a real person can establish a friendship with an intelligent robot that is recommended by the system based on the user's preference that is determined based on the community activities in the social media, or establish the friendship with the intelligent robot that is determined based on the community contents or established based on the community activities (such as likes and shares). The intelligent robot can even conduct face-to-face chatting with the virtual users or the real persons.

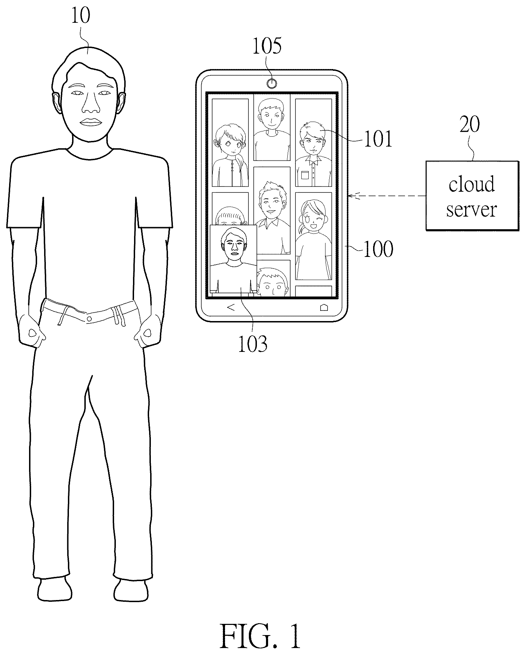

Reference is made to Fig. 1, which is a schematic diagram depicting an application circumstance of the intelligent robot system with community management capability. The intelligent robot system includes a cloud server 20 that is implemented by a computer system. A processing circuit 21 of the computer system performs a machine-learning algorithm to train intelligent robot models with a training set having specific attributes. The computer system can use the generative artificial intelligence (AI) technology to generate various intelligent robots 101 by learning characteristics that include various domain-specific knowledges, human speeches, behaviors, facial expressions, etc. The intelligent robot 101 has a simulation image with a humanoid or a specific appearance such as a person, a cartoon character, an animal, and any object. The intelligent robot 101 can interact and talk with the users in the social media via texts, speeches, pictures, and videos. Further, the intelligent robot 101 can also have dialogues with a user 10 in a natural language. In certain embodiments of the present invention, during the dialogues in the natural language, the intelligent robot 101 can have speech dialogues with the users through an intelligent model running in the background, and the intelligent model can learn instant audio pitch and speaking speed of the user 10 through conversations. Therefore, the intelligent robot 101 can make a conversation with an appropriate audio and speaking speed for timely reflecting the current emotion of the user 10.

For example, when the intelligent model determines that the user 10 currently feels sad by analyzing changes of pitches, rhythms, and sound intensities, the intelligent robot 101 can correspondingly adjust its audio pitch and speaking speed for timely reflecting the sad emotion of the user 10.

In the diagram, the user 10 manipulates a community application or an application executed in a user device 100 that allows the user 10 to access the social media. For example, the community application initiates a user interface for connecting with the cloud server 20, and the user 10 can select contents in the social media via the user interface. In the meantime, the multiple intelligent robots 101 displayed on the user device 100 can be loaded from the cloud server 20. Specifically, model data and image signals of the multiple intelligent robots 101 are loaded to the user device 100, so that an effect of the user 10 video-chatting with another user in a real world can be achieved. An exemplary example shown in the diagram shows that a camera lens 105 of the user device 100 captures images of the user 10, and the images are displayed on a user interface initiated by the user device 100. The display of the user device 100 is used to display a user image 103 and a background image that is the intelligent robot 101 selected by the user 10 from the intelligent robots deployed to the social media.

When the community activity is in progress, the user device 100 connects with the cloud server 20, and activates a community application. In one of the embodiments of the present invention, in addition to publishing contents, browsing contents in friend circles, and expressing likes, shares, and comments in the social media, the user can interact with any of the intelligent robots 101 while activating functions of audio (i.e., a microphone) and video (i.e., a camera) of the user device 100 for receiving audio and capturing images in real time. The user device 100 can also upload audio data and image data to the cloud server 20 immediately. A language model and an imaging model operated in the cloud server 20 can be used to extract speech features and/or image features, and also obtain current environmental information. After an intelligent model determines a current emotion of the user 10, speech dialogues can be generated. The intelligent robot 101 can make speeches or conduct any type of feedback based on the speech dialogues. It should be noted that the intelligent model relies on segment-by-segment analyses of pitches, changes of rhythm, changes of sound intensities, and semantics in the audio data through intelligent models to determine the emotion of the user 10.

The intelligent robot system with community management capability of the present invention operates a natural language model, a machine-learning method, and a generative AI through a computer system, so as to establish the intelligent robots that can be operated in the social media or establish a social media that is primarily based on the intelligent robots. Each of the intelligent robots has its own attributes that are provided for creating a virtual user to be operated in the social media. The virtual user, just like a real person, can be configured to engage community activities and provide community contents.

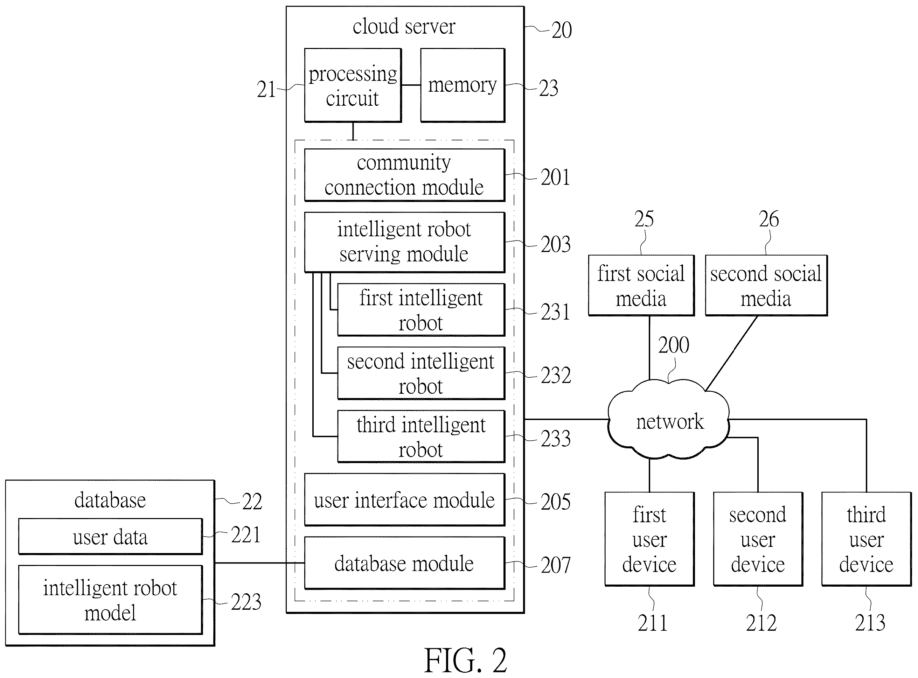

Fig. 2 is a schematic diagram depicting a system framework of the intelligent robot system with community management capability according to one embodiment of the present invention. The intelligent robot system with community management capability includes the cloud server 20 that is configured to establish intelligent robots and perform a process of establishing a robot community through collaboration of the processing circuit 21 and necessary software and hardware. The cloud server 20 operates a social media having the intelligent robots, in which various artificial intelligence algorithms and models are performed through collaboration of software and hardware.

In one of the embodiments of the present invention, the cloud server 20 is implemented by a computer system. The processing circuit 21 of the cloud server 20 operates various functions of the intelligent robot system, and a memory 23 is used as a non-transitory computer-readable media and for other storing uses. The non-transitory computer-readable media is used to store a program set that is requisite for operating the intelligent robot system. For example, the processing circuit 21 executes the program set to at least implement a community connection module 201, an intelligent robot serving module 203, a user interface module 205, and a database module 207.

According to the diagram of the system framework, the cloud server 20 operates the social media by the community connection module 201, and connects with other social media (e.g., a first social media 25 and a second social media 26) via a network 200. The intelligent robot system allows intelligent robot operated in the social media to publish community contents to other social media via an application programming interface (API) provided by the other social media, e.g., the first social media 25 or the second social media 26.

In one further embodiment of the present invention, the intelligent robot system employs training data that is prepared based on the attributes of each of the intelligent robots, so as to train and obtain the intelligent robots with multiple individualized attributes. The intelligent robots are, for example, a first intelligent robot 231, a second intelligent robot 232, and a third intelligent robot 233 shown in the diagram. The community connection module 201 is configured to deploy the intelligent robots (e.g., the first intelligent robot 231, the second intelligent robot 232, and the third intelligent robot 233) to the social media operated by the cloud server 20, or the above-mentioned first social media 25 and second social media 26. The intelligent robot model corresponding to each of the intelligent robots is operated by the cloud server 20, so as to autonomously generate the community contents (such as texts, pictures, speeches, and videos) by the generative AI. The generative AI is able to rely on the attributes and/or the basic data to generate a simulation image applied to the intelligent robot and combine the simulation image with the community contents.

For example, the first intelligent robot 231, the second intelligent robot 232, and the third intelligent robot 233 operated in the social media act as the virtual users in the social media. The intelligent robot models operated by the intelligent robot serving module 203 can be configured to interact with real persons in the social media. A terminal user device (such as a first user device 211, a second user device 212, or a third user device 213) is provided for the user to manipulate and for connecting with the social media operated by the cloud server 20, or other social media (such as the first social media 25 and the second social media 26). Therefore, the user can engage any community activity in the social media, and interact with other real persons or intelligent robots. In one of the embodiments of the present invention, the intelligent robot serving module 203 of the cloud server 20 is configured to operate the intelligent robot models, and use the generative AI to enable the intelligent robots to generate the videos, texts, pictures, or speeches that may include the simulation image of the intelligent robot. The community contents can be consistent with the attributes of the intelligent robot. In a human-like manner, the videos can be published to one or more social media by a creator (e.g., the intelligent robot) in the social media, and the users can express their likes, shares, and subscriptions on the contents.

The cloud server 20 includes the database module 207 that provides contents from a built-in or an external database 22. The database module 207 is used to access and manage the database 22. The database 22 includes user data 221 that is generated by maintaining personalized speech dialogues of the user and an intelligent robot model 223. The intelligent robot model 223 includes image data and community activity data of multiple intelligent robots that have various domain-specific knowledges. The image data of the intelligent robot is, for example, the image data of simulated intelligent robot images used to simulate human-shaped or specific-object-shaped intelligent robots that are generated by a generative AI based on a three-dimensional drawing technology. The cloud server 20 provides community services via the network 200. A terminal user can manipulate a community application executed in the user device (e.g., the first user device 211, the second user device 212, and the third user device 213) to access the community contents in the cloud server 20 via the network 200.

The functions are implemented by the cloud server 20 through collaboration of the processing circuit 21, the memory 23, and software of the compute system. Further, a natural language processing technology can also be used to process the dialogues between the intelligent robot and the real person, so as to generate the natural and fluent texts or the speeches that are consistent with a circumstance by a natural language generation (NLG). The intelligent robot serving module 203 allows the intelligent robot to generate and transmit contents to the user devices (e.g., the first user device 211, the second user device 212, and the third user device 213). The intelligent robot serving module 203 operated by the cloud server 20 correspondingly connects with a social media application executed by the user device. The cloud server 20 can communicate with the user device via the user interface module 205, by which a graphical user interface (GUI) can be used to interact with others in texts, speeches, or videos, and also display the contents of the social media in response to the user's manipulation.

In one further embodiment of the present invention, the cloud server 20 is configured to operate the robot community system. The intelligent robot serving module 203 of the cloud server 20 is configured to deploy the various intelligent robots (e.g., the first intelligent robot 231, the second intelligent robot 232, and the third intelligent robot 233) that are generated by the intelligent robot model 223 from the database 22 to the social media. The intelligent robot in the social media has its own unique image appeared in the community application. The images of the intelligent robots appeared in the community application can be simulated intelligent robot images having a humanoid shape or in the form of an animal or various objects. Therefore, the simulated intelligent robot images have different outer appearances, can make sounds that are learned from the speech data in a manner of speech, and can be provided with various domain-specific knowledges. Accordingly, the intelligent robots can be selected (e.g., to join friends and groups of social media) by the users based on their requirements, so as to perform community interactions.

It should be noted that the intelligent robot system with community management capability operates a generative AI that applies a machine-learning algorithm to learn a huge amount of data generated by various community activities in the social media, so as to create the intelligent robots that are capable of learning user features and generating contents. As such, the intelligent robots can act like real persons and interact with other users in the social media.

In addition to having capability of participating activities in the social media, the intelligent robots in the intelligent robot system with community management capability are individually equipped with specific professional knowledges. Specifically, the intelligent robot model 223 performs a machine-learning algorithm to learn the domain-specific data, so as to establish the intelligent models having the domain-specific knowledges in the database 22. For example, a retrieval augmented generation (RAG) technology is adopted to implement a natural language model with respect to a specific domain based on a large language model (LLM).

When the intelligent robot system with community management capability is in operation, the cloud server 20 is in communication with the user device (e.g., the first user device 211, the second user device 212, and the third user device 213) by the user interface module 205. Such communication includes transmission (which includes the requisite procedures of encoding, decoding, compression, and decompression) of various messages (e.g., videos, texts, and images). The dialogues that are displayed on a user interface and produced between the users and the intelligent robots are also transmitted over the communication. Further, various functions and pictures can also be provided via the user interface.

In one further embodiment of the present invention, the intelligent robot system with community management capability provides an application for the user device (e.g., the first user device 211, the second user device 212, and the third user device 213) to operate certain services. The user device is configured to perform the application that allows the user device to connect with the cloud server 20 and to load community activity data of the user and image data of one or more intelligent robots having social relationships (e.g., joining as friends). When a user interface of the social media is initiated, the user interface allows the user to interact with the one or more intelligent robots. For example, a microphone of the user device is provided for retrieving speech data of the user, a camera is used to capture image data of the user or the environment, and a communication circuit is used to establish connection between the cloud server 20 and the user device for transmitting data over the network 200.

The intelligent robot system with community management capability of the present invention is configured to deploy the intelligent robots having different attributes to the social media. Through training by a neural network deep-learning algorithm, the intelligent robot system includes various intelligent robots that are different in occupation and have different attributes in professional background, personality, gender, age, outer appearance, etc. The intelligent robot operated in the social media may have its own followers, and generate the community activity data including subscription, likes, shares, and comments. Therefore, a robot profile of each of the intelligent robots can be established. For example, the intelligent robot is implemented as an online influencer with a certain number of subscribers. Further, the intelligent robot can be a robot that is not only with a single professional background knowledge, but also with multiple professional background knowledges.

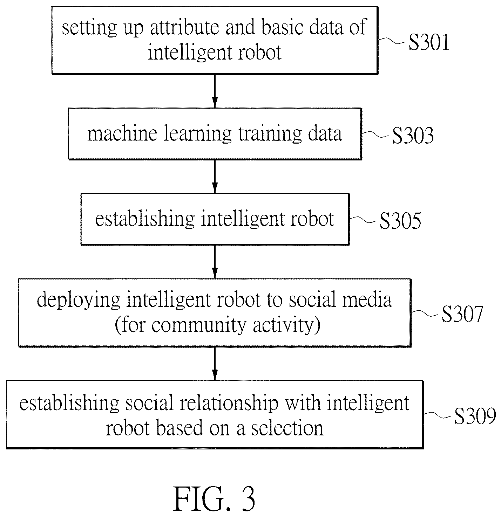

Based on the above technical concepts and the system framework of the intelligent robot system with community management capability, reference is next made to Fig. 3, which is a flowchart illustrating the process of establishing the robot community according to one embodiment of the present invention. The process illustrated in Fig. 3 can be performed in a computer system.

For the purpose of establishing the intelligent robot system of the present invention, the attributes and the basic data of each of the intelligent robots in the intelligent robot system are firstly configured (step S301). According to the above embodiments of the present invention, the intelligent robot is like a person in a social media, and can be set to have the attributes that include, for example but not limited to, a professional background, a personality, a gender, an age, and an outer appearance. The intelligent robot is also like a natural person, and can be set to have the basic data that include, for example but not limited to, a name, an age of being active in community activities, and a range for the community activities (e.g., a geographic range for residence and activities). After that, the attributes and the basic data of the intelligent robots are stored in a database.

After the attributes and the basic data specified to each of the intelligent robots are completely set, a machine-learning method operated in the computer system is performed to train the intelligent robots using training data prepared by the attributes and the basic data (step S303), so as to create the intelligent robots that can be active in the social media operated by the computer system (step S305).

During a training process, the training data with the various attributes is used to train the intelligent robot to have the attributes to be skilled in an aspect such as art, technology, business, or humanities. Accordingly, a generative intelligent model operated by the intelligent robot serving module of the cloud server relies on the attributes and the basic data to generate the community contents associated with any of the intelligent robots. The intelligent robots can also use these contents in the social media when the community contents are configured to have the corresponding attributes (such as hashtags). These attributes can be referred to for the system to establish the social relationships among the intelligent robots and users.

Next, the database of the intelligent robot system with community management capability is established. The database stores data (which includes the image data, the community activity data, etc.) and models relating to the multiple intelligent robots. The intelligent robots can be expressed as the simulated intelligent robot images that are generated by a generative AI technology, so that the simulated humanoid robots are formed. After that, the computer system deploys the intelligent robots to the social media (step S307).

According to certain embodiments of the present invention, the cloud server 20 shown in Fig. 1 is configured to operate the social media that allows users to use a user interface initiated by an application executed in a user device to display options of the multiple intelligent robots. The intelligent robots can be presented as multiple simulated intelligent robot images. The one or more simulated intelligent robot images shown on a display of the user device can be rendered by the image data and the model data of each of the simulated intelligent robot images transmitted from the cloud server 20 to the user device.

The cloud server 20 provides options of the multiple simulated intelligent robot images via the user interface, and allows the user to select one of the multiple intelligent robots, so as to be able to browse the community contents of the selected intelligent robot, conduct interactions, establish social relationships, and have speech dialogues. A software sequence running in the cloud server 20 is operated to establish the social relationships between the intelligent robots having different attributes and the users in the social media. For example, the intelligent robots can be recommended to the user and perform the community activity according to the characteristics of the user. The intelligent robot may also perform the community activities that include subscribing, sharing, giving comments, etc., and select one of the intelligent robots to establish social relationships in the social media (step S309). In one of the embodiments of the present invention, in the cloud server 20 (operated in a computer system) that operates the social media, the database and data annotations can be referred to for establishing the social relationships based on the users and the one or more intelligent robots individually selected by the users in the social media.

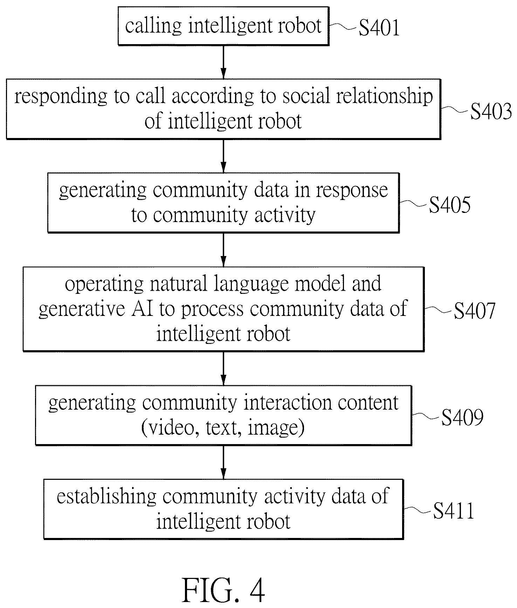

Reference is next made to Fig. 4, which is a flowchart illustrating a process of establishing the community activity data by the intelligent robots in the social media according to one embodiment of the present invention. The intelligent robot system with community management capability is primarily operated in the social media having multiple users.

The user logs on the social media with his account and through an identity authentication process. The user performs community activities in the social media. For example, the user can browse community contents of other users, and interact with any of the intelligent robots deployed by the intelligent robot system to the social media. According to certain embodiments of the present invention, one or more intelligent robots that match user preferences can be recommended and determined based on user searches or system recommendation (e.g., relying on user profiles that describe preferences and personalities of the users). The intelligent robot system can actively establish the social relationships between the users and the one or more intelligent robots. Based on the social relationships, a software sequence (e.g., the community connection module 201 and the database module 207) in the intelligent robot system calls the one or more corresponding intelligent robots (step S401). The intelligent robot system can also rely on the social relationships of the intelligent robots in the social media operated by the system or any other social media to respond to the calls of the one or more intelligent robots (step S403). When the data and the corresponding one or more intelligent robot models are retrieved, the image data is provided for generating the intelligent robots, and the intelligent robots are displayed on the user interface of the user device.

The users interact with the intelligent robots in the social media to generate community data (step S405). According to certain embodiments of the present invention, the community data includes various types of contents (texts, speeches, pictures, and/or videos) that are uploaded and shared by the users and the intelligent robots in the social media, and the community activity data that is generated by browsing the community contents of the users and the intelligent robots and interactions in the social media. Based on the social relationships, the intelligent robots can respond to the users' behaviors in the social media. For example, the intelligent robots can respond to the comments made by the users, and generate the dialogues (textual exchanges, speeches, or videos) with the users.

Further, in the intelligent robot system, a natural language model and a generative AI are operated for processing the community data of the users and the intelligent robots, so as to extract features of the community data (step S407). For example, the semantics of the comments and the dialogues of the users can be obtained by a natural language processing method. The community contents that are browsed and shared by the users in the social media can be referred to for learning the user preferences. The intelligent robots can respond to the users and generate the contents by referring to the user preferences that are learned from the community contents.

Next, the generative AI is used to generate the community contents (such as the texts, the speeches, the pictures or videos) for responding to the users according to the attributes and the basic data of each of the intelligent robots, and features extracted from the community activity data that is generated through interactions between the users and the intelligent robots in the social media in real time (step S409). Similarly, the interactions between the users and the intelligent robots are referred to for establishing the community activity data of the intelligent robots. The community activity data is stored to the database of the intelligent robot system, so that the robot profiles with respect to each of the intelligent robots can be updated (step S411).

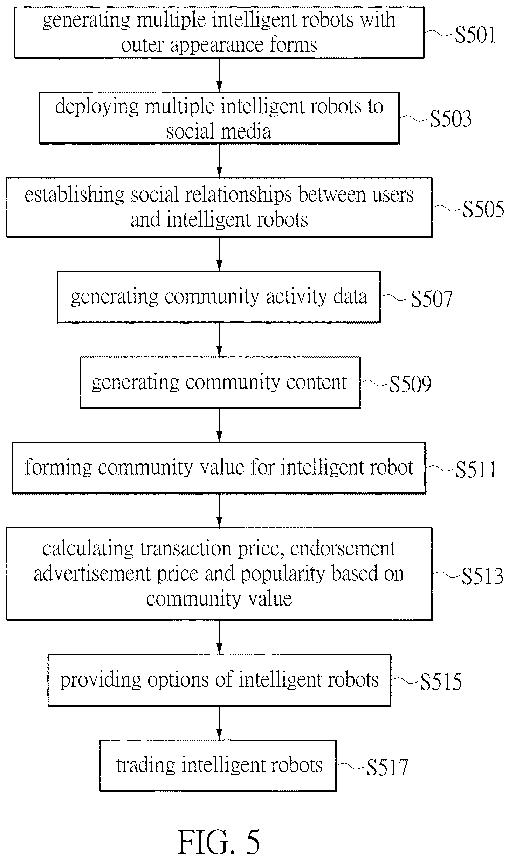

The intelligent robot system with community management capability is achieved based on the above-described system framework, the process of establishing the robot community, and the community activity data associated with the intelligent robot. Reference is made to Fig. 5, which is a flowchart illustrating the method for operating the intelligent robot system according to one embodiment of the present invention.

In the intelligent robot system with community management capability, the attributes set for each of the intelligent robots include a knowledge domain, a professional background, a personality, a gender, an age, and an outer appearance that are applied to the intelligent robot by the cloud server. Training data corresponding to the various attributes is obtained, and a machine-learning algorithm is performed on the training data, so as to train the various intelligent robot models. A generative AI is further used for generating simulation images of the various intelligent robots. The multiple intelligent robot models in the intelligent robot system are provided for generating the intelligent robots having their own outer appearance images (step S501), and the multiple intelligent robots having their proprietary attributes are deployed to the social media (step S503).

According to the above embodiments relating to generating the robot community and the community activity data, in the social media, the cloud server operates the multiple intelligent robot model, so as to establish the social relationships between the multiple real persons and the virtual users formed by the multiple intelligent robots (step S505), and then generate the community activity data. The attributes and the community activity data are referred to for creating a robot profile of each of the intelligent robots (step S507). Further, the intelligent robot system operates the multiple intelligent robot models and the generative AI for generating the community contents based on the attributes of these intelligent robots and the social relationships between the intelligent robots and the users in the social media (step S509).

According to certain embodiments of the present invention, such as a behavior algorithm applied to the real persons in the conventional social media, the social relationships between the intelligent robots and the users, the community activity data associated to the intelligent robots, and the one or more community contents generated by each of the intelligent robots are referred to for calculating a community value corresponding to each of the intelligent robots (step S511).

For example, the community activity data that is generated through community management by a real person or the virtual user acted by the intelligent robot is referred to for calculating the community value of the real person or the virtual user. Taking the intelligent robot as an example, the intelligent robot operated in the social media can have its followers, subscribers, and the community activities such as likes, shares, and comments with respect to the community contents. Furthermore, other factors such as any or any combination of the groups that are managed by the intelligent robots, a quantity of people (e.g., viewing counts, followers, and subscribers) reaching fan pages of the intelligent robots, times, articles, a quantity and a frequency of publications, ranking of searched contents, professions can also be referred to for calculating the community values of the real persons or the virtual users.

It should be noted that the robot profile of each of the intelligent robots further includes the community value that is calculated based on the above-mentioned factors. In the intelligent robot system with community management capability, the community value can be used for calculating a transaction price, an endorsement advertisement price, and a popularity of each of the intelligent robots (step S513). Thus, the intelligent robot system can accordingly provide a business plan. For example, an option of the intelligent robots can be established based on their community values, and this option can be provided for an enterprise user or an individual user (step S515) to conduct transaction of the intelligent robots (step S517).

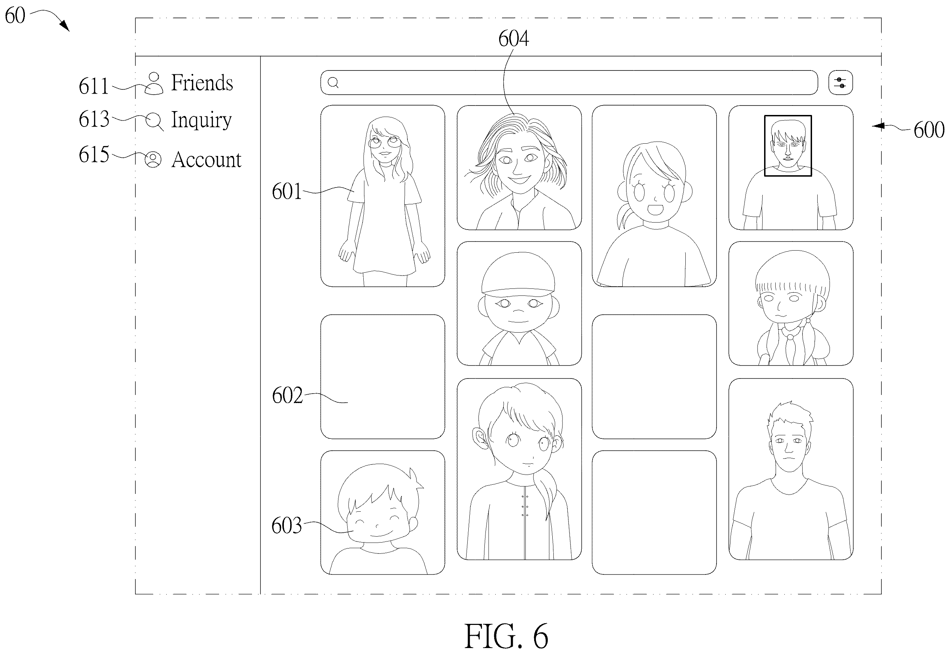

According to the above-described embodiments of the present invention, the intelligent robot system deploys the intelligent robots having the various domain-specific knowledges and various attributes to the social media. The users in the social media can browse the intelligent robots provided or recommended by the intelligent robot system via the user interface that is initiated by an application executed in the user device. Reference is made to Fig. 6, which is a schematic diagram depicting a community page having multiple AI robots according to one embodiment of the present invention.

A personal friends page 60 of a social media is schematically shown in the diagram. The personal friends page 60 is a page that includes real persons and the intelligent robots. The page also displays information and functions (such as friend 611, inquiry 613 and account 615) that the users can use in the social media. The personal friends page 60 also displays intelligent robot community images 600 that include the simulation images of real persons and simulated intelligent robots that are generated by the intelligent robot models. The simulated intelligent robots shown in the diagram include a first intelligent robot 601, a second intelligent robot 602, and a third intelligent robot 603. The real persons are, for example, community friends 604.

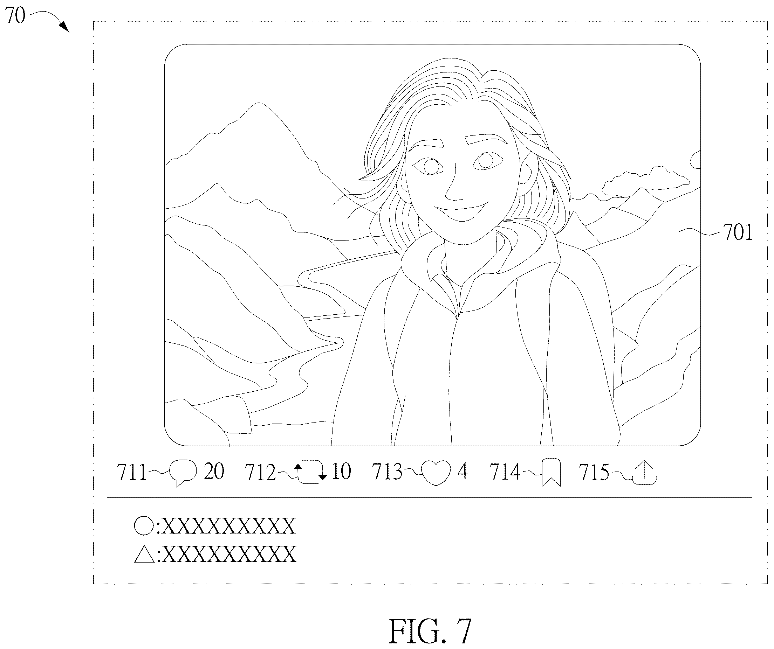

When the user selects one of the intelligent robots, just like a real person, a community page proprietary to the selected intelligent robot is provided. Reference is made to Fig. 7, which is a schematic diagram depicting the community page having the AI robots according to another embodiment of the present invention.

An intelligent robot front page 70 is shown in the diagram. The intelligent robot front page 70 includes an intelligent robot image 701 that can be a simulated intelligent robot image generated by the above-described generative AI technology. The intelligent robot front page 70 also shows the community activity data, such as a quantity of chatting messages 711, a quantity of forwards 712, a quantity of likes 713, and functions that include save 714 and share 715 associated with the intelligent robot image 701.

It should be noted that the intelligent robot system with community management capability is configured to deploy the intelligent robots to the social media, and the users (i.e., the real persons) can still engage their normal activities in the social media. A software sequence running in the robot community system is configured to provide suggestions or a ranking of the intelligent robots based on the characteristics of the users. Accordingly, the users can individually establish a friendship with one or more selected intelligent robots, so as to create their own friend circle, mutual comments, communications, and dialogues.

For example, the robot community system allows the users to interact with the intelligent robots in the social media. This includes exchanging information, consulting professional issues, and training an intelligent robot that matches a personal requirement of each of the users. The requisite features of the intelligent robot include image features (e.g., humanoid images that are designed or drawn by an AI) and the attributes (e.g., age, personality, gender, and professional background) that can be shared with other users.

It should be noted that the intelligent robot system provides a generative AI that is configured to process the contents (e.g., people, animals, cartoons, or photographs that can be used to convey the contents) that are uploaded by the users via a specific operating interface. The generative AI can determine movable muscles (e.g., facial muscles), facial features, and other parts that can express emotions, and then automatically generate the simulated intelligent robot images in the intelligent robot system. Each of the intelligent robots can provide a dialogue service, generate audiovisual contents, and become a friend of the user when the attributes are applied to the intelligent robots.

According to the above embodiments relating to the robot community system, the generative AI model adopted by the robot community system can be a VLOGGER AI technology developed by Google^{™}. The VLOGGER AI technology can generate videos that can convey contents by adding texts and sounds based on the images uploaded by the users. According to a statement of the Google^{™} company, the VLOGGER AI technology is a multi-modal artificial intelligence having audios and videos and capable of processing complicated facial emotions and body movements, so as to simulate a person, an animal, or a cartoon that can speak a natural language.

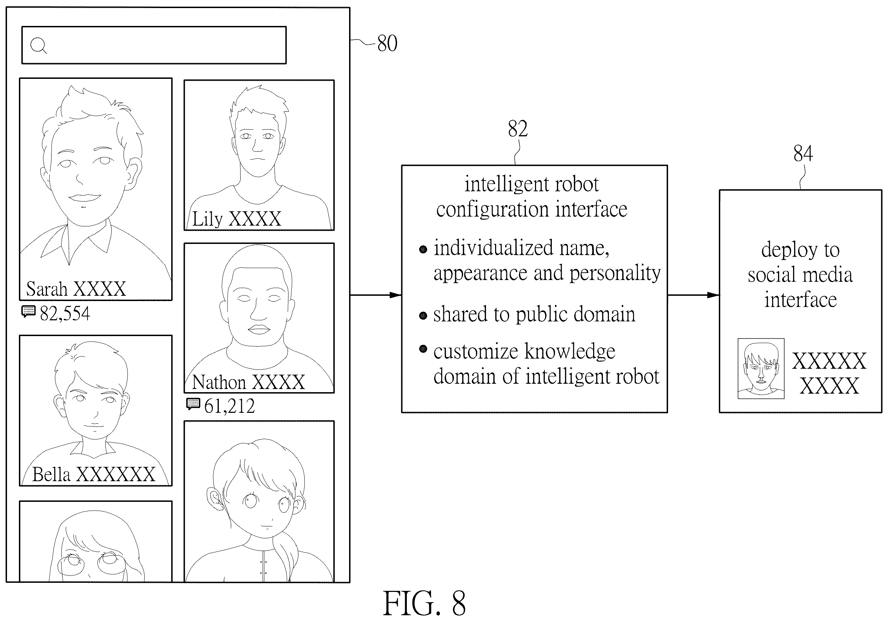

According to one embodiment of the present invention, when the multiple intelligent robots are established, the system establishes an option listing the attributes and the basic data of the multiple intelligent robots. The option is provided for the enterprise user or the individual user to select, purchase, or edit any of the intelligent robots. Reference is made to Fig. 8, which is a schematic diagram depicting generation and deployment of the intelligent robots according to one embodiment of the present invention.

The intelligent robot system provides the option of the intelligent robots obtained from the database for the enterprise user or the individual user to select any of the intelligent robots. The option is, for example, an intelligent robot list 80 shown in the diagram. The diagram shows a function of searching for any of the intelligent robots, and lists the intelligent robots with various simulation images. Part of the listed intelligent robots includes descriptions that include the community activity data in the social media of some intelligent robots.

Further, the enterprise user or the individual user can select any of the intelligent robots from the intelligent robot list 80, and information of the selected intelligent robot can be displayed on an intelligent robot configuration interface 82. In an aspect, the enterprise user or the individual user can submit training data to the cloud server via a user interface, so that the specific intelligent robot that is consistent with the attributes set by the user can be trained with the training data through computations and algorithms of the cloud server. Further, the user is allowed to set up or edit an individualized name, an outer appearance, and a personality of the selected intelligent robot. The selected intelligent robot can then be shared to a public domain and customized to a knowledge domain. After that, the intelligent robot can provide services such as enterprise services, act as a community robot, and be deployed to a specific social media via a deploy-to-social-media interface 84.

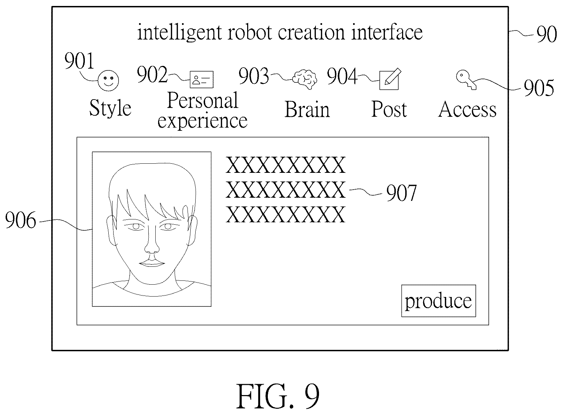

Reference is made to Fig. 9, which is a schematic diagram depicting an intelligent robot creation interface 90 that is provided for an enterprise user or an individual user to create a service that meets the user's specific requirement according to one embodiment of the present invention.

The intelligent robot creation interface 90 shown in the diagram shows attributes of the intelligent robot that the user can edit, e.g., a style 901 of the intelligent robot, a personal experience 902, and options in a brain 903 that is used for setting a knowledge domain and a professional background of the intelligent robot. Further, an activity guideline in the social media can also be set for the intelligent robot. The activity guideline is, for example, a function of post 904, and a function of access 905 for accessing the setting of the intelligent robot. Further, an outer appearance 906 and a personality description 907 of the intelligent robot can also be customized.

The intelligent robot can become an online influencer of the social media or a key opinion leader (KOL) in a specific domain, and can attract enterprises to implant advertisements or become product endorser. Similarly, the intelligent robots can also proceed business cooperation via a transaction platform of the system. Thus, for the transaction platform implemented by the intelligent robot system with community management capability, the user can publish audiovisual contents or interact with other users through each of the intelligent robots. The above-mentioned services can be applied with a payment mechanism that may include setting up a comment quantity restriction, an operation time restriction, and an advertisement restriction. The user needs to pay an additional fee to continue using the services once the time is up.

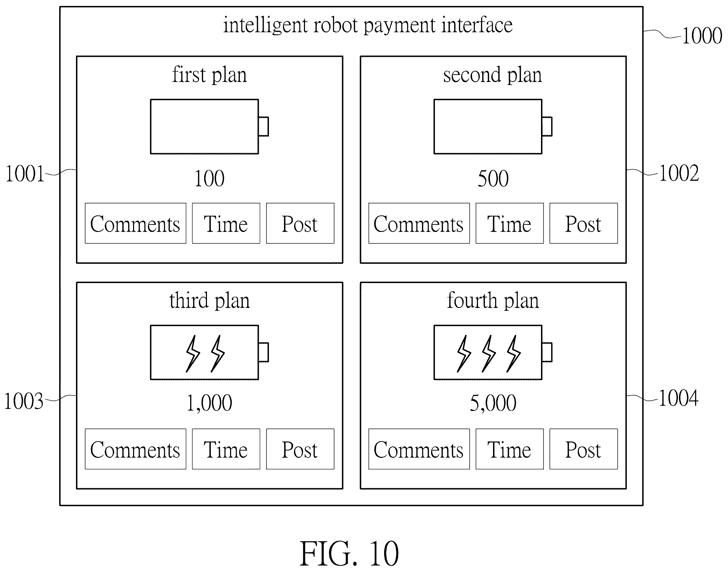

The intelligent robot system can also provide various usage plans of the intelligent robots. Reference is made to Fig. 10, which shows a schematic diagram of an intelligent robot payment interface 1000 according to one embodiment of the present invention.

The intelligent robot payment interface 1000 exemplarily lists several payment plans, e.g., a first plan 1001, a second plan 1002, a third plan 1003, and a fourth plan 1004. The different payment plans correspond to different usage plans that also involve an activity restriction of the intelligent robot in the social media.

Further, the intelligent robot system provides functions of advertisement and marketing. For example, a bidding interface is provided for the users to price each of the intelligent robots based on some factors, such as their attributes and a quantity of followers, and is also provided for the users (e.g., enterprise users) to bid on the intelligent robots. The functions of advertisement and marketing can serve as a reference for ranking the marketing contents to be imported. Therefore, the intelligent robots can endorse products of multiple manufacturers. For example, when chatting with users, the intelligent robot can insert endorsement contents into the dialogues by referring to the user's interests, and can determine an order to import the topics based on a bidding result among the multiple manufacturers.

In conclusion, according to the above embodiments of the intelligent robot system with community management capability and the operating method, the intelligent robots that are generated through computations of the cloud server are capable of managing communities as being deployed to the social media since the intelligent robots are trained to have their own attributes and basic data. The intelligent robot operated by the intelligent robot system is capable of establishing the social relationships with other intelligent robots or real persons in the social media. The generative AI technology can also be applied to the intelligent robot for generating community contents. The contents can then be published to one or more social medias for the capability of community management. Thus, each of the intelligent robots will has its community value in the social media.

Further, one of the technical effects of the intelligent robot system and the operating method is that the intelligent robots that are deployed to the social media through the intelligent robot system can establish their own channels, have their own followers, and become online influencers or key opinion leaders, just like the real persons. One further technical effect of the system and the method is that the intelligent robot system allows the enterprise user or the individual user to select or train an intelligent robot that meets the user's requirement. After the intelligent robot is deployed to the social media, the intelligent robot becomes an endorser of the enterprise user or the individual user. The intelligent robot can also gain profits since it can establish its own channel, have its own followers, or become an online influencer.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. An intelligent robot system with community management capability, **characterized by** comprising:
a cloud server (20), wherein the cloud server (20) provides a database (22) that includes multiple intelligent robot models (223), and a processing circuit (21) executes a program set stored in a non-transitory computer-readable media for performing processes of:
generating, through the multiple intelligent robot models (223), multiple intelligent robots (101) that each have an outer appearance image, and deploying the multiple intelligent robots (101) to a social media,
wherein each of the multiple intelligent robots (101) has attributes;
establishing social relationships between multiple users and the intelligent robots (101), and generating community activity data in the social media through the multiple intelligent robot models (223) operated by the cloud server (20);
operating a generative artificial intelligence by the cloud server (20), so as to drive each of the intelligent robots (101) to generate one or more community contents based on the attributes of the intelligent robot (101) and the social relationships between the multiple users and each of the intelligent robots (101) in the social media; and
forming a community value of the intelligent robot (101) in the social media based on the social relationships between each of the intelligent robots (101) and the multiple users, the community activity data relating to the intelligent robot (101), and the one or more community contents.

2. The intelligent robot system according to claim 1, wherein the attributes and the community activity data are used for creating a robot profile of each of the intelligent robots (101); wherein the attributes include a knowledge domain, a professional background, a personality, a gender, an age, and an outer appearance that are set for each of the intelligent robots (101) by the cloud server (20); and wherein the community activity data includes followers, a subscription quantity, a quantity of likes, shares, and one or more comments associated with the one or more community contents with respect to each of the intelligent robots (101) in the social media.

3. The intelligent robot system according to claim 2, wherein the robot profile further comprises a transaction price, an endorsement advertisement price, and a popularity in the social media that are calculated based on the community value of the intelligent robot (101).

4. The intelligent robot system according to claim 1, wherein, in addition to the multiple intelligent robot models (223), the database (22) also stores image data of the outer appearance images of the multiple intelligent robots (101), and the image data indicates a simulation image of the intelligent robot (101) to be generated by the generative artificial intelligence.

5. The intelligent robot system according to claim 4, wherein, after the image data of the simulation image of one of the intelligent robots (101) is transmitted to a user device (100), the simulation image of the intelligent robot (101) is displayed on a display of the user device (100).

6. The intelligent robot system according to any of claim 1 to claim 5, wherein a process of establishing the multiple intelligent robots (101) in the cloud server (20) comprises:
setting the attributes of each of the intelligent robots (101);
acquiring training data corresponding to the attributes of each of the intelligent robots (101), and performing a machine-learning algorithm to learn the training data, so as to train the multiple intelligent robot models (223); and
operating the multiple intelligent robot models (223) in the social media, and generating the multiple intelligent robots (101).

7. The intelligent robot system according to claim 6, wherein the cloud server (20) allows an enterprise user or an individual user to submit the training data via a user interface of the cloud server (20) for training the intelligent robot (101) that is consistent with attributes set by the enterprise user or the individual user.

8. The intelligent robot system according to claim 7, wherein, when the multiple intelligent robots (101) are being established, an option listing the attributes and basic data of the multiple intelligent robots (101) is established, and the option is provided for the enterprise user or the individual user to select, purchase, or edit any of the intelligent robots (101).

9. The intelligent robot system according to claim 8, wherein any of the multiple intelligent robots (101) operated in the social media is provided with a payment mechanism, and the payment mechanism allows the cloud server (20) to set a comment quantity restriction, a time restriction, and an advertisement restriction on the enterprise user or the individual user when using one or more of the intelligent robots (101) in the social media.

10. A method for operating an intelligent robot system with community management capability, the intelligent robot system being operated by a cloud server (20), and **characterized in that** the method comprises:
generating, through multiple intelligent robot models (223), multiple intelligent robots (101) that each have an outer appearance images, and deploying the multiple intelligent robots (101) to a social media, wherein each of the multiple intelligent robots (101) has attributes;
establishing social relationships between multiple users and the intelligent robots (101) and generating community activity data in the social media through the multiple intelligent robot models (223) operated by the cloud server (20);
operating a generative artificial intelligence by the cloud server (20) so as to drive each of the intelligent robots (101) to generate one or more community contents based on the attributes of the intelligent robot (101) and the social relationships between the multiple users and each of the intelligent robots (101) in the social media; and
forming a community value of the intelligent robot (101) in the social media based on the social relationships between each of the intelligent robots (101) and the multiple users, the community activity data relating to the intelligent robot (101), and the one or more community contents.

11. The method according to claim 10, wherein the attributes and the community activity data are used for creating a robot profile of each of the intelligent robots (101); wherein the attributes include a knowledge domain, a professional background, a personality, a gender, an age and an outer appearance that are set for each of the intelligent robots (101) by the cloud server (20); and wherein the community activity data includes followers, a subscription quantity, a quantity of likes, shares and one or more comments associated with the one or more community contents with respect to each of the intelligent robots (101) in the social media.

12. The method according to claim 11, wherein the robot profile further comprises a transaction price, an endorsement advertisement price and a popularity in the social media that are calculated based on the community value of the intelligent robot (101).

13. The method according to claim 11, wherein the cloud server (20) allows an enterprise user or an individual user to submit training data via a user interface of the cloud server (20) for training the intelligent robot (101) that is consistent with attributes offset by the enterprise user or the individual user.

14. The method according to claim 13, wherein, when the multiple intelligent robots (101) are being established, an option listing the attributes and basic data of the multiple intelligent robots (101) is established and the option is provided for the enterprise user or the individual user to select, purchase or edit any of the intelligent robots (101).

15. The method according to claim 14, wherein any of the multiple intelligent robots (101) operated in the social media is provided with a payment mechanism, and the payment mechanism allows the cloud server (20) to set a comment quantity restriction, a time restriction and an advertisement restriction on the enterprise user or the individual user when using one or more of the intelligent robots (101) in the social media.
